# EUROPÄISCHE PATENTSCHRIFT

(11) **EP 2 227 118 B1**
(45) Veröffentlichungstag und Bekanntmachung des Hinweises auf die Patenterteilung: **29.02.2012**
(21) Anmeldenummer: 08866148.3
(22) Anmeldetag: 06.11.2008
(51) Int. Cl.: A47J 27/00, A47J 43/046

(54) **AUTOMATISCHER MILCHSCHAUMBEREITER**
AUTOMATIC MILK FOAMER
DISPOSITIF DE PRODUCTION AUTOMATIQUE DE MOUSSE DE LAIT

(30) Priorität: 21.12.2007 DE 102007063549
(43) Veröffentlichungstag der Anmeldung: 15.09.2010
(73) Patentinhaber: Mueller, Martin, 72800 Eningen (DE)
(72) Erfinder: Mueller, Martin, 72800 Eningen (DE); Volz, Martin, 73252 Lenningen (DE); Shepherd, Martin, J., Hong Kong (CN)
(74) Vertreter: Bulling, Alexander
(86) Internationale Anmeldenummer: PCT/EP2008/009358
(87) Internationale Veröffentlichungsnummer: WO 2009/083063

(56) Entgegenhaltungen:
- EP-A- 1 731 068
- WO-A-2006/050900
- WO-A-2006/124051
- DE-A1- 19 624 648
- JP-A- 2004 261 254

## Beschreibung

Die Erfindung betrifft einen automatischen Milchschaumbereiter mit einem Behältnis zur Aufnahme von Milch, mit einem Grundkörper, auf den oder in den das Behältnis auf- oder einsetzbar ist, mit einem in das Behältnis einsetzbaren Rührwerk zum Aufschäumen der Milch, wobei im Grundkörper ein Motor zum Antreiben des Rührwerks vorgesehenen sein kann, und mit einer Heizeinrichtung zum Erwärmen von im Behältnis vorhandener Milch.

Derartige Milchschaumbereiter, die als tragbare Einheiten zur Verfügung stehen, sind aus dem Stand der Technik, beispielsweise der WO 2006/050900 A1, vorbekannt. Nachteil solcher Milchschaumbereiter ist, dass insbesondere die Reinigung des Behältnisses aufwändig ist. Wird das Behältnis beispielsweise nicht unverzüglich nach der Herstellung des Milchschaums ausgespült; so kann der Fall auftreten, dass im Behältnis Milchreste antrocknen, die zu Bakterien- und Keimbildungen führen. Da im Behältnis elektrische und/oder elektronische Bauteile, insbesondere in Form der Heizeinrichtung, vorhanden sind, ist es nicht möglich, das Behältnis beispielsweise in ein Reinigungsbad zu tauchen oder in einer Spülmaschine zu reinigen.

Aus der EP 1 731 068 A1 ist ein Kochmixer mit einem Behälter bekannt geworden, der von einem Grundteil abnehmbar ist. Zur Erwärmung von in dem Behälter vorhandenen Lebensmitteln ist ein eine Induktionsheizung vorgesehen. Ähnliche Kochmixer sind aus der JP 2004 261254 A und der WO 2006/124051 A bekannt. Der vorliegenden Erfindung liegt die Aufgabe zugrunde, einen eingangs genannten Milchschaumbereiter bereitzustellen, der vom Benutzer leichter handzuhaben ist.

Diese Aufgabe wird mit einem Milchschaumbereiter mit den Merkmalen des Anspruchs 1 gelöst.

Ein derartiger Milchschaumbereiter hat den Vorteil, dass die elektrischen beziehungsweise elektronischen Bauteile der Heizeinrichtung nicht im oder am Behältnis vorgesehen sind, sondern ausschließlich innerhalb des Grundkörpers untergebracht sind. Aufgrund einer geeigneten Materialwahl des Behältnisses kann dennoch gewährleistet werden, dass eine zuverlässige und rasche Erwärmung von im Behältnis vorhandener Milch stattfindet.

Das Behältnis ist folglich vorzugsweise frei von elektrischen oder elektronischen Bauteilen sowie von elektrischen Anschlüssen. Ein derartiges Behältnis hat den Vorteil, dass es zur Reinigung in Spülflüssigkeit untergetaucht beziehungsweise in Spülmaschinen gegeben werden kann.

Um eine geeignete Heizwirkung zu erzielen, kann vorgesehen sein, dass Teile des Behältnisses oder das Behältnis als solches, wenigstens abschnittsweise aus einem elektrisch leitfähigen und/oder einem ferromagnetischen Material sind.

Besonders vorteilhaft ist, wenn der Behältnisboden wenigstens abschnittsweise aus einem ferromagnetischen und/oder elektrisch leitfähigen Material ist. In diesem Fall ist dann im Grundkörper in dem Bereich, in dem der Behältnisboden auf den Grundkörper aufgesetzt wird, der Wechselfelderzeuger vorgesehen. Mittels des Wechselfelderzeugers kann folglich der Behältnisboden erwärmt werden, wodurch im Behältnis vorhandene Milch erwärmt wird. Das Vorsehen von ferromagnetischem Material hat den Vorteil, dass eine Bündelung des magnetischen Wechselfeldes derart erzeugbar ist, dass eine rasche Erwärmung des Behältnisbodens, und damit der Milch, einhergeht. Vorzugsweise kann der gesamte Behältnisboden von einer ferromagnetischen Platte gebildet sein. Die Dicke des Bodens ist dabei abzustimmen auf die Art und Intensität des erzeugten magnetischen Wechselfeldes.

Bei einer weiteren vorteilhaften Ausgestaltung der Erfindung kann zusätzlich oder alternativ vorgesehen sein, dass die Behältniswandung oder Teile davon aus einem ferromagnetischen oder elektrisch leitfähigen Material sind und dass der Grundkörper einen eine nestartige Vertiefung zur Aufnahme des Behältnisses bildenden, im Wesentlichen parallel zur Behältniswandung verlaufenden Wandabschnitt vorsieht, hinter dem der Wechselfelderzeuger angeordnet ist. Folglich ist hier vorgesehen, dass aufgrund des Wechselfeldes eine Erwärmung der Behältniswandung beziehungsweise Abschnitte hiervon, erreicht wird. Dies hat den entscheidenden Vorteil, dass im Bereich unterhalb des Behältnisses Bauraum eingespart wird. Gerade der Bereich des Grundkörpers unterhalb des Behältnisses kann eine Reihe von Bauteilen beherbergen, beispielsweise einen Elektromotor zum Antrieb des Rührwerks. Insofern kann durch die Anordnung des Wechselfelderzeugers im Wesentlichen parallel zur Behältniswandung Bauraum eingespart werden. Zudem können bei einer derartigen Ausbildung Behältnisse mit einer geringen Grundfläche und mit einer vergleichsweise großen Höhe Verwendung finden. Die Oberfläche der Behältniswandung, die sich aufgrund des angelegten magnetischen Wechselfeldes erwärmt, kann dabei durchaus größer sein als die Oberfläche des Bodens. Insofern kann eine bessere und gleichmäßigere Erwärmung von im Behältnis vorhandener Milch erreicht werden. Ein weiterer Vorteil ist, dass andere im Grundteil vorhandene Bauteile, wie insbesondere ein Elektromotor, mit einem größeren Abstand zum Wechselfelderzeuger angeordnet werden können. Dabei ist zu berücksichtigen, dass die Wechselfelderzeuger ein magnetisches Wechselfeld in alle Raumrichtungen aussenden. Insofern kann durchaus der Umstand auftreten, dass elektrisch leitfähige Bauteile, wie insbesondere ein im Gehäuse untergebrachter Elektromotor, bei einer Anordnung nahe des Wechselfelderzeugers unerwünschterweise mit erwärmt werden. Gerade dadurch, dass der Wechselfelderzeuger parallel zur Behältniswandung im Bereich der nestartigen Vertiefung vorgesehen ist, kann er vergleichsweise fern von anderen elektrisch leitenden Bauteilen angeordnet werden.

Der Wechselfelderzeuger kann dabei direkt am entsprechenden Wandabschnitt des Grundkörpers oder kann auch zu diesem beabstandet angeordnet sein. Je nach gewünschter Intensität des erzeugten magnetischen Wechselfeldes ist eine entsprechende Abstimmung möglich.

Der Wechselfelderzeuger ist als den die grundkörperseitige Vertiefung bildenden Wandabschnitt wenigstens abschnittsweise ringartig umgebende Induktionsspule ausgebildet sein. Hierdurch wird gewährleistet, dass die Behältniswandung, beziehungsweise Teile hiervon, gleichmäßig erwärmt werden. Der Wechselfelderzeuger kann dabei als einlagig ausgebildete Induktionsspule realisiert sein.

Ferner ist vorteilhaft, wenn der Wechselfelderzeuger bei in die Vertiefung eingesetztem Behältnis einen Anteil der Behältniswandung überdeckt, der im Bereich von ein viertel bis drei viertel der Behältniswandung liegt. Der überdeckte Anteil der Behältniswandung ist dann vorzugsweise aus einem elektrisch leitfähigen und/oder magnetischen Material. Hierdurch wird eine genügend große, sich aufgrund des magnetischen Wechselfeldes erwärmende Oberfläche bereitgestellt.

Bei einer weiteren Ausführungsform der Erfindung ist vorteilhaft, wenn der Wechselfelderzeuger bei in die Vertiefung eingesetztem Behältnis einen Anteil der Behältniswandung abdeckt, der größer ist als der Anteil der Behältniswandung, der von im Behältnis vorhandener Milch abgedeckt wird, und zwar dann, wenn der Milchschaumbereiter nicht in Betrieb ist und wenn die maximal zulässige Füllmenge von Milch im Behältnis vorhanden ist. Bei sich nicht drehendem Rührwerk werden dann folglich auch Abschnitte der Behältniswandung erwärmt, welche nicht mit Milch in Kontakt sind. Wird allerdings das Rührwerk zugeschalten, so steigt aufgrund der rotierenden Bewegung Milch an der Behältniswandung nach oben. Insofern wird dann Milch auch an den Abschnitten der Behältniswandung erwärmt, welche bei sich nicht drehendem Rührwerk von der Milch nicht benetzt werden. Insgesamt ergibt sich hierdurch eine vergleichsweise große, sich bei angelegtem Wechselfeld erwärmende Oberfläche, was zu einer raschen und gleichmäßigen Erwärmung der Milch führt.

Bei einer weiteren Ausgestaltung der Erfindung ist vorgesehen, dass diejenigen Abschnitte der Behältniswandung oder des Behältnisbodens, welche nicht zur Erwärmung von im Behältnis vorhandener Milch dienen, wenigstens abschnittsweise aus Glas sind. Dadurch kann der im Behältnis herzustellende Milchschaum während dessen Herstellung betrachtet werden und auf einfache Weise beurteilt werden, ob der Milchschaum eine geeignete Konsistenz aufweist beziehungsweise ob ausreichend Milchschaum hergestellt wurde.

Bei einer besonders bevorzugten Ausführungsform ist der gesamte Behältnisboden und der sich an den Behältnisboden anschließende Abschnitt der Behältniswandung, der cirka ein viertel bis drei viertel der Höhe des Behältnisses ausmachen kann, einstückig aus einem elektrisch leitfähigen, und insbesondere ferromagnetisch, leitenden Material. Die restliche, sich nach oben erstreckende Behältniswandung ist vorzugsweise aus Glas.

Grundsätzlich können gemäß der Erfindung Wechselfelderzeuger derart vorgesehen sein, dass sowohl der Boden als auch die Wandung des Behältnisses erwärmt wird. Dadurch wird insgesamt der sich erwärmende Bereich Behältnisses vergleichsweise groß, was zum einen zu einer schnellen und zum anderen zu einer gleichmäßigen Erwärmung Milch führt.

Gemäß der Erfindung ist denkbar, dass der Behältnisboden auf seiner Unterseite wenigstens abschnittsweise eine wärmeisolierende und aufgrund des magnetischen Wechselfeldes sich nicht oder nur geringfügig erwärmbare Beschichtung, eine Platte oder entsprechend ausgebildete Isolierabschnitte aufweist. Dies hat den Vorteil, dass das Behältnis mit der heißen Milch vom Grundkörper abgenommen werden und auf eine Unterlage, beispielsweise einem Tisch, abgestellt werden kann, ohne dass dieser aufgrund des heißen Inhalts des Behältnisses erhitzt oder beschädigt wird. Dennoch wird dann, wenn der der Innenseite zugewandte Teil des Behältnisbodens aus einem sich aufgrund des magnetischen Wechselfeldes erwärmenden Material ist, der Boden des Behältnisses und damit die Milch erwärmt.

Zum Antreiben des Rührwerks ist vorteilhafterweise im Grundkörper ein Motor zum Antreiben des Rührwerks vorgesehenen.

Das Rührwerk als solches ist dabei vorzugsweise lösbar von der Drehkopplung ausgebildet. Dadurch kann das Rührwerk vor Ausgießen des Milchschaums oder zur Reinigung des Behältnisses abgenommen werden.

Das Rührwerk wird über eine berührungslose Magnetkopplung mit dem Motor drehgekoppelt sein. Eine derart berührlose Magnetkopplung hat den Vorteil, dass keine mechanischen Bauteile sich durch das Behältnis hindurch erstrecken; Dichtungsmittel entfallen deshalb.

Zur Realisierung der Magnetkopplung ist am Boden des Behältnisses eine sich nach axial oben, insbesondere wenigstens weitgehend zylindrisch ausgebildete Erhebung, vorgesehen sein. Auf der dem Behältnisinnenraum abgewandten Seite kann dann ein Magnet beziehungsweise ein ferromagnetisches Material an einer vom Motor angetriebenen Welle vorgesehen sein, das in die Erhebung ragt. Auf der axial oder radial gegenüberliegenden, im Behältnisinnenraum liegenden Seite der Erhebung können zur Drehkopplung rührwerkseitige ferromagnetische beziehungsweise magnetisierte Abschnitte vorgesehen sein, die mit dem Magnet beziehungsweise dem ferromagnetischen Material derart zusammenwirken, dass bei einer Drehung der Welle das Rührwerk in eine Drehbewegung versetzt wird. Die Erhebung im Boden des Behältnisses kann dabei gleichzeitig zur Lagerung des Rührwerks im Behältnis dienen.

Vorzugsweise ist denkbar, dass der Motor derart angesteuert wird, dass er mit einer schwankenden Drehzahl läuft. Dadurch kann erreicht werden, dass der sich bildende Milchschaum aufgrund unterschiedlicher Drehzahlen des Rührwerks hin und wieder wenigstens geringfügig in sich zusammenfällt und so eine bessere und gleichmäßigere Durchmischung der Milch stattfindet. Dabei kann ein Zufallsgenerator zur Ansteuerung des Motors vorgesehen werden.

Weitere Einzelheiten und vorteilhafte Ausgestaltungen der Erfindung sind der nachfolgenden Beschreibung zu entnehmen, anhand derer die Erfindung näher beschrieben und erläutert ist.

Es zeigen:
- Figur 1: eine perspektivische Ansicht eines Milchschaumbereiters;
- Figur 2: einen Längsschnitt durch den Milchschaumbereiter gemäß Figur 1;
- Figur 3: eine perspektivische Ansicht eines zweiten Milchschaumbereiters; und
- Figur 4: einen Längsschnitt durch den Milchschaumbereiter gemäß Figur 3.

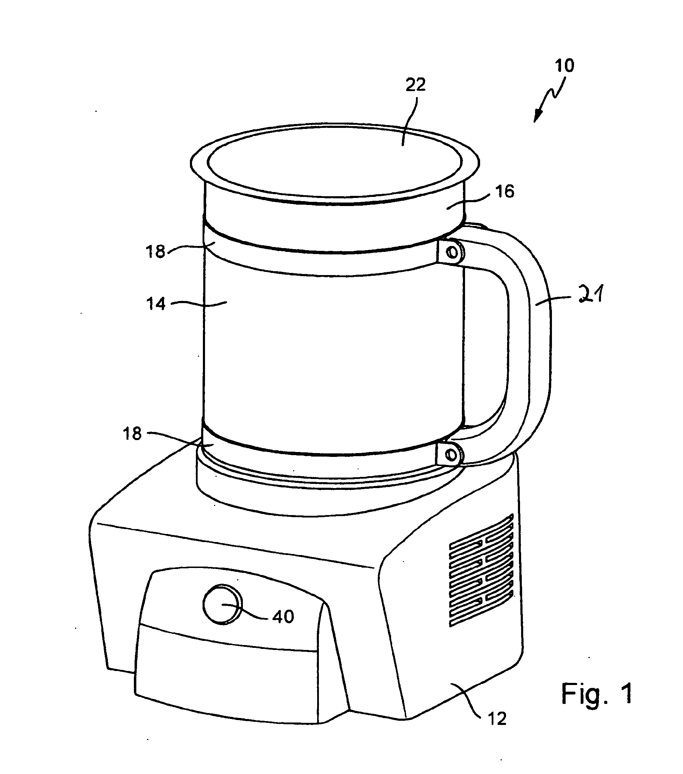

Der in der Figur 1 dargestellte Milchschaumbereiter 10 umfasst einen Grundkörper 12 sowie ein auf den Grundkörper 12 aufsetzbares Behältnis 14 zur Aufnahme von Milch. Die zylindrische Wandung 16 des Behältnisses 14 ist aus Glas. Zur Handhabung des Behältnisses 14 sind zwei Metallbänder 18 vorgesehen, die die Wandung 16 einfassen. Zwischen den beiden Bändern 18 ist ein Griff 21 vorgesehen.

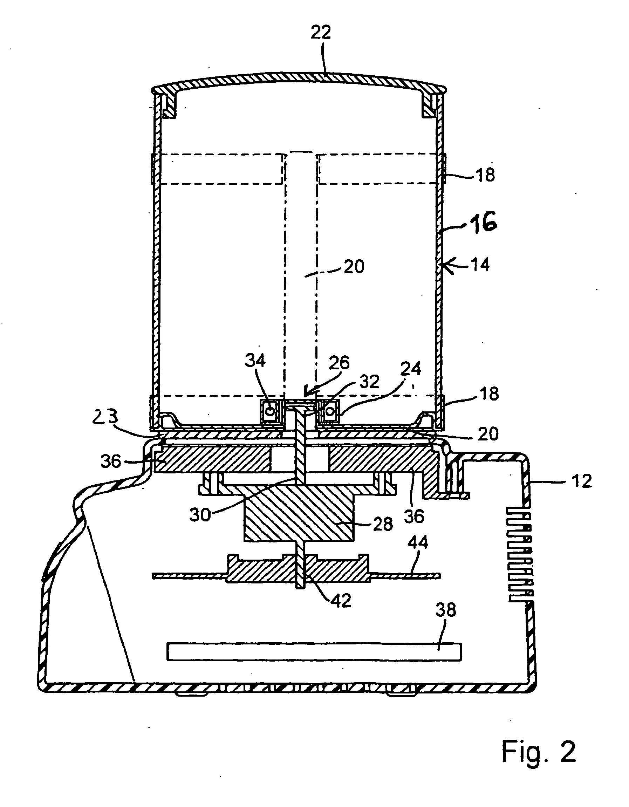

Wie aus der Figur 2 deutlich wird, weist das Behältnis 14 einen Behältnisboden 20 auf, der aus einem ferromagnetischen Material hergestellt ist und, wie in Figur 2 gezeigt, doppellagig und einstückig mit dem unteren Metallband ausgebildet sein kann. Die dem Behältnisboden 20 abgewandte Seite des Behältnisses 14 ist mit einem abnehmbaren Deckel 22 verschlossen. Der Behältnisboden 20 weist auf seiner Unterseite wärmeisolierende und nicht elektrisch leitende Isolierabschnitte in Form einer Keramikplatte 23 auf.

Innerhalb des Behältnisses 14 ist ein Rührwerk 24 vorhanden, das aus dem Behältnis 14 in axialer Richtung herausgenommen werden kann. Das Rührwerk 24 ist dabei um die Mittellängsachse des Behältnisses 14 drehbar im Behältnis 14 angeordnet. Am Behältnisboden 20 ist eine sich nach axial oben, kreiszylindrisch ausgebildete Erhebung 26 vorgesehen. Die Erhebung 26 dient als Lagerzapfen des Rührwerks 24.

Wie aus Figur 2 deutlich wird, ist im Grundkörper 12 ein Elektromotor 28 vorgesehen, der eine Welle 30 antreibt. Das freie Ende der Welle 30, das Magnetabschnitte 32 aufweist, ragt dabei in die dem Behältnisinnenraum abgewandte Seite der Erhebung 26. Das Rührwerk 24 weist den Magnetabschnitten 32 radial gegenüberliegende ferromagnetische Kopplungsabschnitte 34 auf, welche derart ausgebildet sind, dass bei einer Drehung der Motorwelle 30 mit den Magnetabschnitten 32 die Kopplungsabschnitte 34 beziehungsweise das Rührwerk 24 zum Aufschäumen von im Behältnis 14 vorhandener Milch in eine Drehbewegung versetzt werden. Die Bewegungskopplung zwischen dem Motor 28 beziehungsweise den Magnetabschnitten 32 und dem Rührwerk 24 beziehungsweise den Kopplungsabschnitten 34 erfolgt dabei berührungslos durch den Behältnisboden 20 beziehungsweise die Erhebung 26 des Behältnisses 14 hindurch. Eine konkrete Möglichkeit einer berührungslosen Bewegungskopplung ist beispielsweise in der WO2006/050900 A1 beschrieben. Der Elektromotor 28 weist auf seiner Unterseite einen Wellenabschnitt 42 auf, an dem ein Kühlventilator 44 angebracht ist.

Im Grundkörper 12 ein Wechselfelderzeuger 36 zur Erzeugung eins magnetischen Wechselfeldes vorgesehen. Das Wechselfeld wird dabei derart erzeugt, dass sich der ferromagnetische Boden 20 des Behältnisses 14 aufgrund des Wechselfeldes zur Erwärmung von im Behältnis 14 vorhandener Milch induktiv erwärmt. Eine solche Induktionsheizeinrichtung hat den Vorteil, dass sämtliche elektrischen und elektronischen Bauteile innerhalb des Grundkörpers 12 vorhanden sind, so dass am Behältnis 14 weder elektrische oder elektronische Bauteile noch elektrische Anschlüsse vorzusehen sind. Das Behältnis 14 ist dabei so ausgebildet, dass es vom Grundkörper 12 abgenommen werde kann und vollständig in Spülflüssigkeit eingetaucht werden kann oder in einer Geschirrspülmaschine gereinigt werden kann, ohne dass es beschädigt wird. Vorzugsweise wird zur Reinigung das Rührwerk 24 aus dem Behältnis 14 herausgenommen. Zudem ist denkbar, dass die Glaswandung 16 samt Behältnisboden 20 und Bodenplatte 23 aus den Bändern 18 in axialer Richtung herausnehmbar ist, so dass lediglich die Glaswandung 16 samt Behältnisboden 20 und mit der Bodenplatte 23, die eine unlösbare Einheit bilden können, gereinigt werden kann.

Durch das Vorsehen der wärmeisolierenden Platte 23 wird zwar die Innenseite des Behältnisbodens 20 zur Erwärmung der Milch erwärmt, die Unterseite bzw. die Platte 23 wird nicht erwärmt. Dies hat den Vorteil, dass das Behältnis 16 mit der heißen Milch vom dem Grundkörper 12 abgenommen werden auf einem Untergrund, beispielsweise einem Tisch, abgestellt werden kann, ohne dass dieser aufgrund des heißen Inhalts des Behältnisses 16 erwärmt oder beschädigt wird.

Im Grundkörper 12 ist eine Leiterplatte 38 vorgesehen, die zur Ansteuerung des Motors 28 und des Wechselfelderzeugers 36 dient. Zum Inbetriebsetzen des Milchschaumbereiters 10 ist an der Vorderseite des Grundkörpers 12, wie in Figur 1 deutlich zu erkennen ist, ein Startknopf 40 vorgesehen. Insgesamt erfolgt die Ansteuerung des Elektromotors 28, und damit des Rührwerks 24, und des Wechselfelderzeugers 36, und damit die Erwärmung des Bodens 20 nach Betätigung des Startknopfes 40 derart, dass in dem Behältnis 14 vorhandene Milch zum einen erwärmt und zum anderen aufgeschäumt wird.

Die Ansteuerung des Motors 28 erfolgt dabei vorzugsweise derart mittels eines Zufallsgenerators, dass eine schwankende Drehzahl des Motors und damit des Rührwerks 24 erreicht wird. Hierdurch kann eine bessere Durchmischung der aufzuschäumenden Milch erreicht werden.

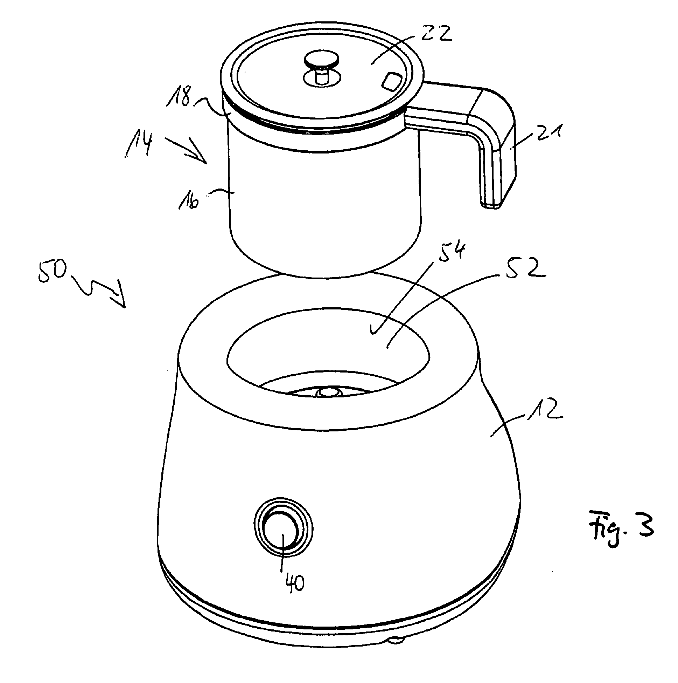

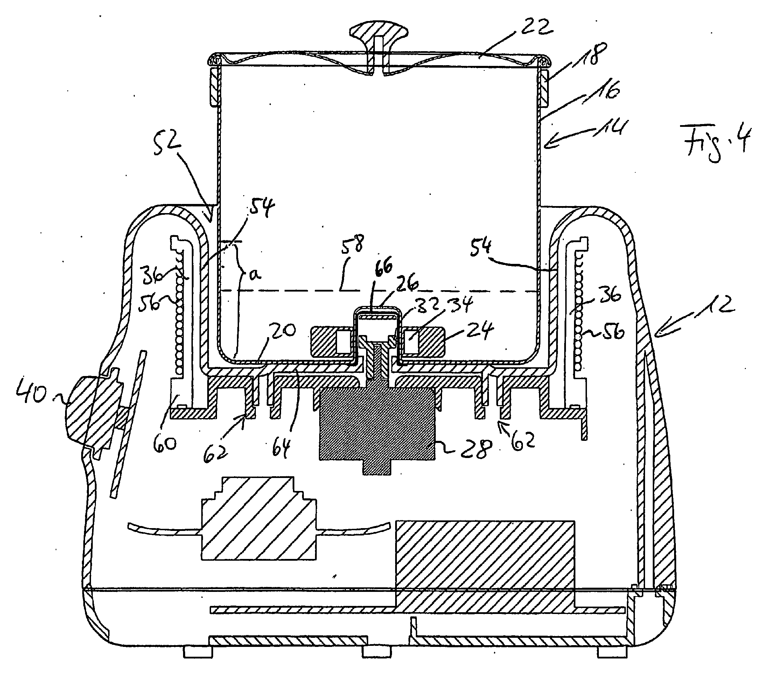

In den Figuren 3 und 4 ist ein zweiter erfindungsgemäßer Milchschaumbereiter 50 dargestellt, wobei Bauteile dieses Milchschaumbereiters 50 mit Bezugszeichen versehen sind, die den Bezugszeichen der Bauteile des Milchschaumbereiters 10 gemäß Figur 1 und 2 entsprechen.

Wie aus Figur 3 deutlich wird, weist der Grundkörper 12 des Milchschaumbereiters 50 eine nestartige Vertiefung 52 zur Aufnahme des Behältnisses 14 auf. Die Vertiefung 52 wird dabei in radialer Richtung von einem im Wesentlichen parallel zur Behältniswandung 16 verlaufenden, ringartigen Wandabschnitt 54 umgeben. Auf der dem Behältnis 14 abgewandten Seite des Wandabschnitts 54 ist ein ebenfalls ringartig umlaufender

Wechselfelderzeuger 36 vorgesehen: Der Wechselfelderzeuger 36 umfasst dabei eine einlagig ausgebildete Induktionsspule 56.

Anders als beim Milchschaumbereiter 10 gemäß Figuren 1 und 2 ist beim Milchschaumbereiter 50 gemäß Figuren 3 und 4 der Wechselfelderzeuger 36 nicht im Bereich des Bodens 20 des Behältnisses 14 angeordnet, sondern im Bereich der Wandung 16. Der Wechselfelderzeuger 36 deckt dabei, wie insbesondere aus Figur 4 deutlich wird, cirka ein drittel der Höhe der Wandung 16 des Behältnisses 14 ab.

Zur Erwärmung des Behältnisses 16 ist dieses bei der Ausführungsform gemäß Figur 3 und 4 vollständig aus einem elektrisch leitfähigen Material, das zudem ferromagnetische Eigenschaften aufweist. Erfindungsgemäß ist dennoch denkbar, dass der obere Abschnitt des Behältnisses 14, beziehungsweise dessen Wandung 16, der dem Wechselfelderzeuger 36 nicht gegenüberliegt, aus Glas ausgebildet sein kann. Hierdurch kann beim Aufschäumvorgang die im Behältnis 14 vorhandene Milch beobachtet werden.

Die ringförmige Anordnung des Wechselfelderzeugers 36 gemäß Figur 4 hat den Vorteil, dass der Wechselfelderzeuger 36 einen größeren Abstand hin zum Elektromotor 28 als beim Milchschaumbereiter 10 gemäß Figur 1 und 2 hat. Hierdurch tritt eine unerwünschte Erwärmung des Elektromotors 28 aufgrund des vorhandenen Wechselfeldes weniger in Erscheinung, als beim Milchschaumbereiter 10 gemäß Figur 1 und 2, da dort der Wechselfelderzeuger näher am Elektromotor 28 angeordnet ist. Zudem kann mit dem Milchschaumbereiter 50 eine größere Oberfläche des Behältnisses 14 erwärmt werden als beim Milchschaumbereiter 10, bei dem die sich zu erwärmende Oberfläche auf die Grundfläche des Behältnisbodens 20 beschränkt ist.

Insgesamt kann beim Milchschaumbereiter 50 damit die Wärme gleichmäßiger in das Behältnis 14 eingebracht werden, wodurch ein unerwünschtes Anbrennen von Milch im Behältnis 14 vermieden werden kann.

Das Behältnis 16 kann, wie in Figur 4 angedeutet ist, eine Maximalfüllstandsmarke 58 aufweisen. Um zu gewährleisten, dass beim Aufschäumvorgang das Behältnis 14 nicht überläuft, darf Milch folglich nur bis maximal zu dieser Marke 58 in das Behältnis eingefüllt werden. Wie aus Figur 4 deutlich wird, deckt der Wechselfelderzeuger 36 einen Anteil a der Behältniswandung 16 ab, der größer ist als der Anteil der Behältniswandung 16, der von bis zur Marke 58 eingefüllter Milch abgedeckt wird. Hierdurch wird erreicht, dass die Milch, die beim Aufschäumvorgang an der Wandung 16 nach oben steigt, ebenfalls erwärmt wird. Insgesamt wird dadurch die sich aufgrund des magnetischen Wechselfelds erzeugende Oberfläche vergrößert.

Wie aus Figur 4 deutlich wird, kann der Wechselfelderzeuger 36 samt Induktionsspule 56 auf einem gemeinsamen Trägerteil 60 angeordnet sein, welches über Verbindungsabschnitte 62 an der den Boden 64 der Vertiefung 52 bildenden Wandung des Grundkörpers 12 angeordnet ist. Der Boden 64 der Vertiefung 52 weist eine bei in die Vertiefung 52 eingesetztem Behältnis 14 in der Erhebung 26 des Behältnisses 14 vorhandene Bodenerhebung 66 auf, in welche die Magnetabschnitte 32 ragen.

## Patentansprüche

1. Automatischer Milchschaumbereiter (10, 50) mit einem Behältnis (14) zur Aufnahme von Milch, das einen Behältnisboden (20) und eine den Behältnisboden einfassende Behältniswandung (16) vorsieht, mit einem Grundkörper (12), auf den oder in den das Behältnis (14) auf- oder einsetzbar ist, mit einem in das Behältnis einsetzbaren Rührwerk (24) zum Aufschäumen der Milch, wobei das Rührwerk (24) über eine berührungslose
Magnetkopplung (34) mit einem Motor (28) drehgekoppelt ist, und mit einer Heizeinrichtung zum Erwärmen von im Behältnis (14) vorhandener Milch, **dadurch gekennzeichnet,**
**dass** der Grundkörper (12) einen eine nestartige Vertiefung (52) zur Aufnahme des Behältnisses (14) bildenden, im Wesentlichen parallel zur Behältniswandung (16) verlaufenden Wandabschnitt (54) und einen Boden (64) vorsieht,
**dass** im Grundkörper (12) der Motor (28) zum Antreiben des Rührwerks (24) vorgesehenen ist,
**dass** die Heizeinrichtung einen im Grundkörper (12) vorgesehenen Wechselfelderzeuger (36) zur Erzeugung eines magnetischen Wechselfeldes umfasst, wobei der Wechselfelderzeuger (36) hinter dem die nestartige Vertiefung (52) bildenden Wandabschnitt (54) angeordnet und als den Wandabschnitt (54) wenigstens abschnittsweise ringartig umgebende Induktionsspule (56) ausgebildet ist,
**dass** die Behältniswandung (16) oder Teile davon aus einem ferromagnetischen und/oder elektrisch leitfähigem Material sind, so dass sie aufgrund des magnetischen Wechselfeldes erwärmbar sind,
**dass** am Behältnisboden eine sich nach axial oben erstreckende Erhebung (26) vorgesehen ist,
**dass** der Boden (64) der Vertiefung (52) eine bei in die Vertiefung (52) eingesetztem Behältnis (14) in der Erhebung (26) des Behältnisses vorhandene Bodenerhebung (66) aufweist,
**dass** auf der dem Behältnisinnenraum abgewandten Seite der Bodenerhebung (66) eine einen Magnet (32) bzw. ein ferromagnetisches Material aufweisende, vom Motor (28) angetriebene Welle (30) in die Bodenerhebung (66) ragt und dass auf der im Behältnisinnenraum liegenden Seite der Erhebung (26) rührwerkseitige ferromagnetische bzw. magnetisierte Abschnitte (34) derart mit dem Magnet (32) bzw. ferromagnetischen Material zusammenwirken, dass bei einer Drehung der Welle (30) das Rührwerk (24) in eine Drehbewegung versetzt wird.

2. Milchschaumbereiter (10, 50) nach Anspruch 1, **dadurch gekennzeichnet, dass** das Behältnis (14) frei von elektrischen Bauteilen und elektrischen Anschlüssen ausgebildet ist.

3. Milchschaumbereiter (10, 50) nach Anspruch 1 oder 2,
**dadurch gekennzeichnet, dass** Teile des Behältnisses (14) und/oder das Behältnis (14) selbst wenigstens abschnittsweise aus einem ferromagnetischen und/oder elektrisch leitfähigem Material sind.

4. Milchschaumbereiter (10) nach Anspruch 1, 2 oder 3,
**dadurch gekennzeichnet, dass** der Behältnisboden (20) wenigstens abschnittsweise aus einem ferromagnetischen und/oder elektrisch leitfähigem Material ist und dass im Grundkörper (12) in dem Bereich; in dem der Behältnisboden (20) auf den Grundkörper (12) aufgesetzt wird, der Wechselfelderzeuger (36) vorgesehen ist.

5. Milchschaumbereiter (50) nach einem der vorherigen Ansprüche, **dadurch gekennzeichnet, dass** der Wechselfelderzeuger (36) bei in die Vertiefung (52) eingesetztem Behältnis (14) einen Anteil im Bereich von ¼ bis ¾ der Behältniswandung (16) überdeckt.

6. Milchschaumbereiter (50) nach einem der vorherigen Ansprüche, **dadurch gekennzeichnet, dass** der We_chselfelderzeuger (36) bei in die Vertiefung (52) eingesetztem Behältnis (14) einen Anteil. (a) der Behältniswandung (16) abdeckt, der größer ist als der Anteil der Behältniswandung (16), der von im Behältnis (14) vorhandener Milch abgedeckt wird, wenn der Milchschaumbereiter (50) nicht in Betrieb ist und wenn die maximal zulässige Füllmenge von Milch im Behältnis (14) vorhanden ist.

7. Milchschaumbereiter (10, 50) nach einem der vorhergehenden Ansprüche, **dadurch gekennzeichnet, dass** die Behältniswandung (16) und/oder der Behältnisboden wenigstens abschnittsweise aus Glas sind.

8. Milchschaumbereiter (10, 50) nach einem der vorhergehenden Ansprüche, **dadurch gekennzeichnet, dass** der Boden (20) auf seiner Unterseite wenigstens abschnittsweise eine wärmeisolierende und aufgrund des magnetischen Wechselfeldes sich nicht oder nur geringfügig erwärmbare Beschichtung, eine Platte (23) und/oder entsprechend ausgebildete Isolierabschnitte aufweist.

9. Milchschaumbereiter (10, 50) nach einem der vorhergehenden Ansprüche, **dadurch gekennzeichnet, dass** der Motor (28) derart angesteuert wird, dass er mit einer schwankenden Drehzahl läuft.

10. Milchschaumbereiter (10, 50) nach Anspruch 9, **dadurch gekennzeichnet, dass** ein Zufallsgenerator zur Ansteuerung des Motors (28) vorgesehen ist.

## Claims

1. Automatic milk foamer (10, 50) with a container (14) to receive milk, providing a bottom of the container (20) and a container wall (16) that circumvents the bottom of the container, with a base (12) on or in which the container (14) can be placed, with a stirring device (24) that can be used in the container to foam the milk, with the stirring device (24) being swivel-coupled with a motor (28) via a non-contact magnet coupling (34), and with a heating device to heat the milk present in the container (14), **characterized in:**
**that** the base (12) features a bottom (64) and a wall section (54) that essentially runs parallel to the container wall and forms a nest-like depression (52) to receive the container (14),
**that** the motor (28) to drive the stirring device is provided in the base (12),
**that** the heating device includes an alternating field generator (36) in the base (12) to generate a magnetic alternating field, wherein the alternating field generator (36) being arranged behind the wall section (54) that forms the nest-like depression (52) and designed as a ring-like induction coil (56) that surrounds the wall section (54) at least in part,
**that** the container wall (16) or parts thereof are made of a ferromagnetic and/or electrically conductive material, so that they can be heated due to the magnetic alternating field,
**that** a raised part (26) that stretches upwards axially is provided on the container bottom,
**that** the bottom (64) of the depression (52) features a bottom-raised-part (66) in the raised part (26) of the container (14) when the container (14) is inserted in the depression (52),
**that** on the side of the bottom-raised-part (66) that faces away from the interior of the container there is a shaft (30) powered by the motor (28) comprising a magnet (32) or a ferromagnetic material jutting out into the bottom-raised-part (66),
and **that** on the side of the raised part (26) that lies in the container interior the ferromagnetic or magnetised sections (34) act together with the magnet (32) or ferromagnetic material in such a way that when the shaft (30) turns, the stirring device (24) is placed in a rotating motion.

2. Milk foamer (10, 50) according to claim 1, **characterized in that** the container (14) being free of electric components and electric connections.

3. Milk foamer (10, 50) according to claim 1 or 2, **characterized in that** parts of the container (14) and/or the container as a whole (14) being at least in parts being made of ferromagnetic and/or electrically conductive material.

4. Milk foamer (10) according to claim 1, 2 or 3,
**characterized in that** the bottom of the container (20) being at least in part made out of a ferromagnetic and/or electrically conductive material and the alternating field generator (36) being provided in the base (12) in the area in which the bottom of the container (20) is placed on the base (12).

5. Milk foamer (50) according to one of the previous claims, **characterized in that** the alternating field generator (36) covering a part in a range from ¼ to ¾ of the wall of the container (16) when the container (14) is inserted in the depression (52).

6. Milk foamer (50) according to one of the previous claims, **characterized by** the fact that, when the container (14) is inserted in the depression (52), the alternating field generator (36) covers a part (a) of the wall of the container (16) that is larger than the share of the container wall (16) that is covered by the milk present in the container (14) when the milk foamer (50) is not in operation and when the maximum permissible filling volume of milk is present in the container (14).

7. Milk foamer (10, 50) according to one of the previous claims, **characterized in that** the wall of the container (16) and/or the bottom of the container at least in segments being made out of glass.

8. Milk foamer (10, 50) according to one of the previous claims, **characterized in that** the bottom (20) on its underside at least in segments having a coating that acts in a heat-insulating way and due to the magnetic alternating field can not be heated or can be heated only a little, a plate (23) and/or correspondingly arranged insulation sections.

9. Milk foamer (10, 50) according to one of the previous claims, **characterized in that** the motor {28) being activated in such a way that it runs with a varying rotational speed.

10. Milk foamer (10, 50) according to claim 9, marked by a random number generator being provided for the activation of the motor (28).

## Revendications

1. Dispositif automatique de préparation de la mousse de lait (10, 50), comportant un récipient (14) destiné à recevoir le lait et muni d'un fond (20) et d'une paroi (16) encerclant ledit fond, comportant un corps de base (12) sur lequel ou dans lequel peut être posé le récipient (14), comportant un mécanisme de brassage (24) pouvant être introduit dans le récipient pour faire mousser le lait, ledit mécanisme de brassage (24) étant couplé en rotation avec un moteur via un couplage magnétique (34) sans contact, et comportant un dispositif de chauffage pour chauffer le lait contenu dans le récipient (14), **caractérisé**
**en ce que** le corps de base (12) comporte un tronçon de paroi (54) sensiblement parallèle à la paroi (16) du récipient et formant une cavité (52) en forme de poche destinée à recevoir le récipient (14), ainsi qu'un fond (64),
**en ce que** le moteur (28) destiné à actionner le mécanisme de brassage (24) est prévu dans le corps de base (12),
**en ce que** le dispositif de chauffage comprend un générateur de champ alternatif (36), prévu dans le corps de base (12) et destiné à générer un champ alternatif magnétique, ledit générateur de champ alternatif (36) étant disposé derrière le tronçon de paroi formant la cavité (52) en forme de poche et étant réalisé sous la forme d'une bobine d'induction (56) entourant au moins par zones en forme d'anneau le tronçon de paroi (54),
**en ce que** la paroi (16) du récipient ou des parties de celle-ci sont réalisées dans un matériau ferromagnétique et/ou électroconducteur, de telle sorte qu'elles peuvent chauffer sous l'effet du champ alternatif magnétique,
**en ce que** sur le fond du récipient est prévue une protubérance (26) orientée axialement vers le haut,
**en ce que** le fond (64) de la cavité (52) comporte une protubérance (66) disposée dans la protubérance (26) du récipient lorsque le récipient (14) est posé dans la cavité,
**en ce qu'**un arbre (30) actionné par le moteur (22) et muni d'un aimant (32) ou d'un matériau ferromagnétique, s'avance dans la protubérance (66) sur le coté de la protubérance (66) opposé à l'intérieur du récipient, et
**en ce que** sur le coté de la protubérance (26) situé à l'intérieur du récipient, du côté du mécanisme de brassage, des parties (34) magnétisées ou ferromagnétiques coopèrent avec l'aimant (32) ou le matériau ferromagnétique, de telle sorte que le mécanisme de brassage (24) est entraîné en rotation pendant une rotation de l'arbre (30).

2. Dispositif de préparation de la mousse de lait (10, 50) selon la revendication 1, **caractérisé en ce que** le récipient (14) est réalisé sans composants électriques et sans raccords électriques.

3. Dispositif de préparation de la mousse de lait (10, 50) selon la revendication 1 ou 2, **caractérisé en ce que** des parties du récipient (14) et/ou le récipient (14) lui-même sont réalisés au moins dans certaines zones dans un matériau ferromagnétique et/ou électroconducteur.

4. Dispositif de préparation de la mousse de lait (10) selon la revendication 1, 2 ou 3, **caractérisé en ce que** le fond (20) du récipient est réalisé au moins dans certaines zones dans un matériau ferromagnétique et/ou électroconducteur, et **en ce que** le générateur de champ alternatif (36) est prévu dans le corps de base (12), dans la zone dans laquelle le fond (20) du récipient est posé sur le corps de base (12).

5. Dispositif de préparation de la mousse de lait (50) selon l'une quelconque des revendications précédentes, **caractérisé en ce que** le générateur de champ alternatif (36) couvre une proportion dans une plage de 1/4 à 3/4 de la paroi (16) du récipient, lorsque ledit récipient (14) est posé dans la cavité (52).

6. Dispositif de préparation de la mousse de lait (50) selon l'une quelconque des revendications précédentes, **caractérisé en ce que**, lorsque ledit récipient (14) est posé dans la cavité (52), le générateur de champ alternatif (36) couvre une proportion (a) de la paroi (16) du récipient, laquelle est supérieure à la proportion de la paroi (16) couverte par le lait contenu dans le récipient (14) lorsque le dispositif de préparation de la mousse de lait (50) n'est pas en marche et lorsque le lait contenu dans le récipient (14) représente la quantité de remplissage maximale autorisée.

7. Dispositif de préparation de la mousse de lait (10, 50) selon l'une quelconque des revendications précédentes, **caractérisé en ce que** la paroi (16) du récipient et/ou le fond du récipient sont réalisés en verre au moins dans certaines zones.

8. Dispositif de préparation de la mousse de lait (10, 50) selon l'une quelconque des revendications précédentes, **caractérisé en ce que** le fond (20) sur sa face inférieure comporte au moins dans certaines zones un revêtement thermo-isolant et ne chauffant pas ou seulement faiblement sous l'effet du champ alternatif magnétique, une plaque (23) et/ou des parties isolantes configurées de manière correspondante.

9. Dispositif de préparation de la mousse de lait (10, 50) selon l'une quelconque des revendications précédentes, **caractérisé en ce que** le moteur (28) est commandé de telle sorte qu'il tourne avec une vitesse de rotation variable.

10. Dispositif de préparation de la mousse de lait (10, 50) selon la revendication 9, **caractérisé en ce qu'**il est prévu un générateur de nombres aléatoires pour commander le moteur (28).
